# EUROPEAN PATENT SPECIFICATION

(11) **EP 3 085 615 B1**
(45) Date of publication and mention of the grant of the patent: **05.12.2018**
(21) Application number: 16165780.4
(22) Date of filing: 18.04.2016
(51) Int. Cl.: B63H 25/42

(54) **BOAT THRUSTER TRANSMISSION UNIT, THRUSTER DRIVE UNIT, THRUSTER ASSEMBLY AND BOAT**
BOOTSTRAHLRUDERGETRIEBEEINHEIT, STRAHLRUDERANTRIEBSEINHEIT, STRAHLRUDERANORDNUNG UND BOOT
UNITÉ DE TRANSMISSION DE PROPULSION DE BATEAU, UNITÉ DE PROPULSION, ENSEMBLE DE PROPULSEUR ET BATEAU

(30) Priority: 24.04.2015 SE 1550490
(43) Date of publication of application: 26.10.2016
(73) Proprietor: Effective Manufacturing Sweden AB, 70376 Örebro (SE)
(72) Inventor: Andersson, Magnus, 70376 Örebro (SE); Rybeck, Martin, 45991 Ljungskile (SE)
(74) Representative: Fenix Legal KB

(56) References cited:
- DE-A1-102006 039 160
- NL-A- 7 810 571
- US-A- 1 546 188
- US-A- 2 623 406

## Description

### TECHNICAL AREA

This invention relates to a boat thruster drive including a transmission unit comprising a gear housing having first and second end plates and an annular gear having an output shaft rotatably supported between the end plates. The invention also relates to a a thruster assembly and a boat having a thruster assembly.

### BACKGROUND

Drive units for boat thrusters are known in in a wide variety of sizes and configurations for use in different sizes of boats. Providers of boat thrusters may therefore need to stockpile many different sizes of thrusters. To keep the stockpile down it would be desirable to conceive a single drive unit that can be used in in a wide range of boat sizes with small or negligible modifications.

In the prior art, DE 10 2006 039160 A1 discloses a ship propeller drive transmission operated by two diesel motors, and NL 7810571 A discloses a similar transmission operated by electric motors. US 2 623 406 A discloses a speed reducer casing primarily directed to easy change of gear ratio by substituting gears. None of these documents suggest the transmissions to be used as modifiable thruster units.

### DISCLOSURE OF THE INVENTION

An object of the invention is to provide a drive unit that is easily modifiable in a wide range for boat sizes of typically between 20 and 70 feet.

Another object is to provide a drive unit that can be used in a wide power range of typically between 2 and 20 kW by using a desired number of a single type and size electric motor and a few interchangeable secondary low cost transmission components.

In one aspect of the invention the drive unit further comprises at least two electric motors and at least three spaced sealable apertures in the first end plate receiving optionally two or at least three corresponding drive shafts of a corresponding number of said electric motors to be mounted on the first end plate for gear engagement with the annular gear. Thereby a single transmission unit can easily be provided with a number of electric motors that is required to supply the output power needed for the actual size of the boat.

The transmission unit may further comprise a second output shaft supported in the second end plate in gear engagement with the output shaft. Such transmission may further have mutually interchangeable gears on the output shaft and the second output shaft for the gear engagement therebetween. Thereby the second output shaft, instead of the output shaft, can be used as a thruster drive shaft for optimizing a drive unit to a certain size of a boat and to an available type - for example 12, 24 or 48V - of electric power source in the boat. For example, to keep the thruster/propeller rotational speed at an appropriate value when (1) using a 48V power source the second output shaft may need to be geared down by using the gears in the ratio 1:2, whereas when (2) using a 12V power source the second output shaft may need to be geared up by using the gears in the ratio 2:1, while when (3) using a 24V power source there may be no need to have a second output shaft as the thruster drive shaft but the output shaft of the annular gear only.

At least the end plates may be categorized as included in the secondary low cost transmission components mentioned above and may then be made of injection molded plastics material.

The transmission unit can further comprise sealing means for sealing one or more of the sealable apertures that do not receive a motor shaft.

In one embodiment, the first end plate has four of said apertures.

In another embodiment, the first end plate has five of said apertures.

In still another embodiment, the first end plate has six of said apertures.

By such provision of different low cost end plates the transmission unit can be further varied with small modification of its main components.

A boat thruster assembly according to the invention has a drive unit according to the invention and a thruster unit adapted to be driven by the output shaft or the second output shaft of the transmission unit.

A boat according to the invention is further provided with a thruster assembly according to the invention.

### BRIEF DESCRIPTION OF THE DRAWINGS

FIG. 1 is a broken away side view diagrammatically showing a boat provided with an exemplary bow thruster arrangement that may be implemented with a transmission/drive unit according to the invention;
FIG. 2 is an oblique top view of a drive unit according to the invention provided with two motors;
FIG. 3 is an oblique top view of a modified drive unit of FIG. 1 and provided with six motors;
FIG. 4 is an oblique side view partly in section corresponding to line 4-4 of FIG. 2 of another modified drive unit according to the invention;
FIGS. 5A and 5B are diagrammatic broken away views illustrating an example of modifying a unit of the invention by using mutually interchangeable gears;
FIG. 6 is a simplified lateral view partly in section corresponding to line 6-6 of FIG. 2 of still another modified drive unit according to the invention;
FIG. 7 is an oblique side view corresponding to FIG. 4 of yet another modified drive unit according to the invention; and
FIGS. 8A-D are diagrams illustrating examples of modifying a unit of the invention by using interchangeable top end plates and a variable number of electric motors for each end plate.

In the drawings, components having analogous functions are denoted by same reference numerals.

### DETAILED DESCRIPTION OF EXEMPLARY EMBODIMENTS

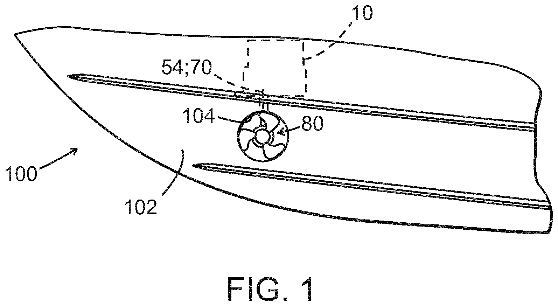

In the example shown in FIG. 1 a boat 100 is provided with a bow thruster 80 having a drive unit 10 including an output or thruster drive shaft 54, 70. Such a general arrangement is well known in the art and will not be described in greater detail. Thruster 80, such as a propeller and a hub unit, is mounted in a transverse channel 104 extending through the boat 100. Boat 100 may optionally also be provided with a stern thruster in a known manner (not shown).

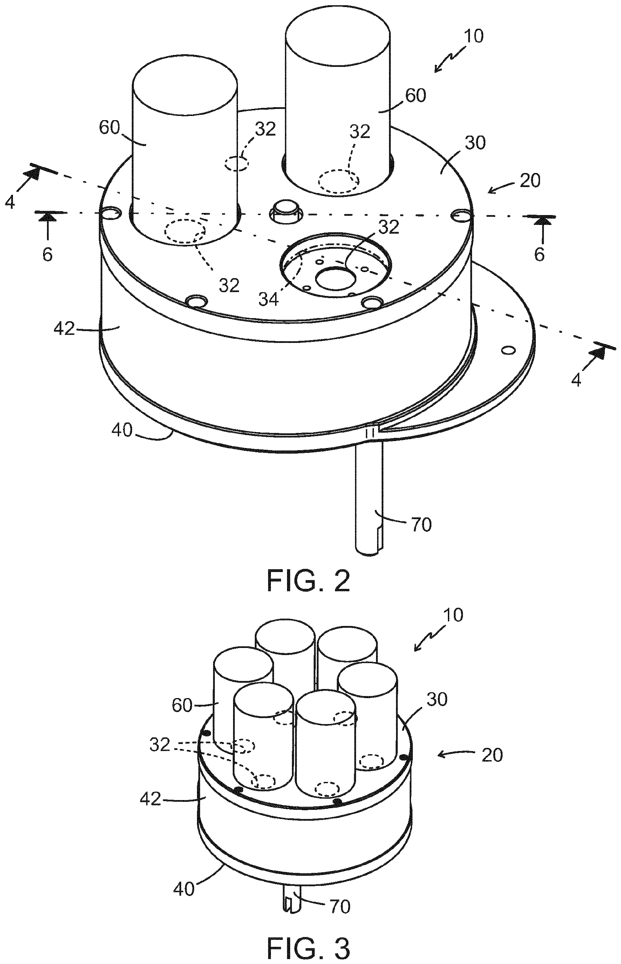

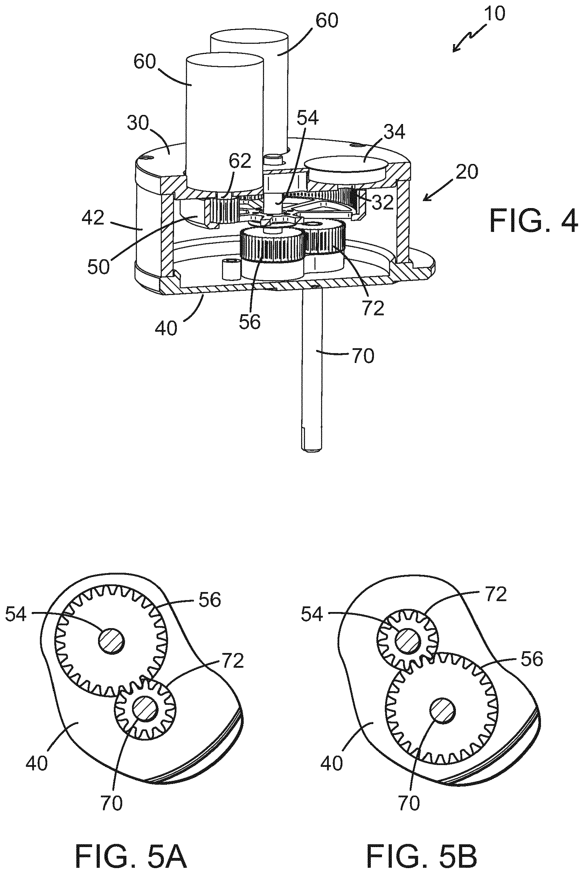

FIG. 2 shows an example of a thruster drive unit 10 according to the invention. Unit 10 has a transmission unit 20 including a gear housing comprising a generally cylindrical wall 42 and opposite end plates 30 and 40 bolted to the ends of wall 42. The first or top end plate 30 has a circular pattern of apertures 32 in countersunk portions of the top end plate 30 for receiving drive shafts 62 (FIG. 4) of electric motors 60 to be mounted therein. While other types of electric motors are conceivable, each motor 60 is typically a small size brushless permanently magnetized motor capable of being powered for example by battery sources of varying voltages, for example 12, 24 or 48V, or even a higher voltage. In the FIG. 2 embodiment top end plate 30 has three apertures for optionally receiving shafts of two (as shown) or three motors 60. In the shown case of two motors 60, the unused aperture 32 is sealed by a sealing means, such as a releasable lid 34 (shown in phantom) in the countersunk portion of the top end plate 30 for sealing aperture 32. Other types of sealing means may, however, be equally suitable.

As indicated in FIG. 3, top end plate 30 may optionally have three more apertures 32 in the circular pattern. In that case, the top end plate 30 is capable of receiving drive shafts of a maximum of six electric motors 60 mounted thereon. Other variations of apertures will be later described.

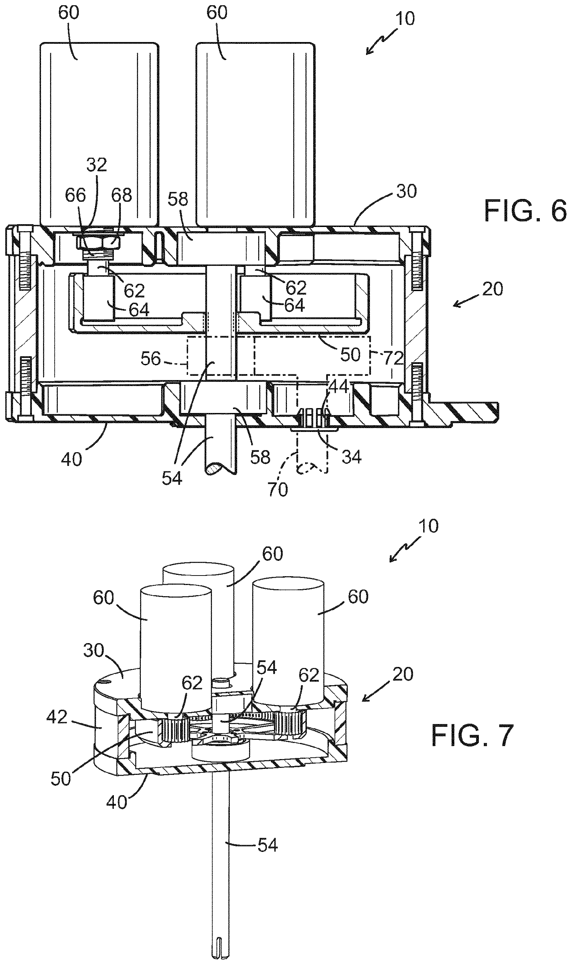

The simplified view of FIG. 4 further shows the internal configuration of the drive unit 10. Each motor 60 is rigidly mounted on the top end plate 30 in a suitable manner, For example, motors 60 may be attached by screws (not shown) clamping motor end plates to the countersunk portions of top end plate 30. Other means for attaching the motors 60 to the top end plate 30 may be readily conceivable by a person skilled in the art. In the example shown, each motor has a motor shaft 62 that may be sufficiently journally supported in the motor. Each motor shaft 62 further has a pinion or gear 64 in gear engagement with an annular gear 50. Annular gear 50 has an output shaft 54 that is concentrically supported in the endplates 30, 40 via bearings such as ball bearings 58 (shown in FIG. 6 embodiment). Output shaft 54 has mounted thereon a gear 56 which in turn is in gear engagement with a gear 72 mounted on a thruster drive shaft 70 supported in the second or bottom end plate 40 by a bearing such as a ball bearing (not shown).

As indicated in FIGS. 5A and 5B, gears 56, 72 may also be helical gears and be of different size and configured as mutually interchangeable between shafts 54 and 70 for being capable of changing the output ratio of the transmission unit 20. To that end, gears 56, 72 may be releasably mounted on their respective shafts 54, 70, for example by spline joints (not shown). While a typical gear ratio of gears 56, 72 may be 2:1, other ratios of gears 56, 72 may be provided for further variation when so desired.

In the modified drive unit 10 of FIG. 6 thruster shaft 70 as well as gears 56, 72 (shown in phantom) and the corresponding bearing have been removed. Thereby output shaft 54 will directly function as the thruster drive shaft. In this exemplary embodiment each motor has a threaded sleeve 66 for rigidly attaching the motor 60 at the aperture 32 by a nut 68. While a modified bottom end plate not having an aperture 44 for the thruster drive shaft 70 may likewise be used in this embodiment, in the example shown aperture 44 is sealed by a sealing means 34, in this case in the form of a low cost snap-on plastics material sealing. As further indicated in FIG. 6, at least also the end plates 30, 40 can be formed at a low cost of a plastics material, for example by injection molding, and be used in all embodiments of the invention.

The embodiment of FIG. 7 shows a further variation of the transmission unit 20. This embodiment has the top end plate 30 and annular gear 50 in common with the FIG. 4 embodiment for a given number of motors, so that variants only of the bottom end-plate 40 and the cylindrical wall 42 may be needed when assembling either variant, i.e. with or without the final stage of gears 56, 72. It would further at least be imaginable to have bottom part of output shaft 54 being releasably mounted (not shown) to the upper part thereof and identical to second output/thruster drive shaft 70, so that thruster drive shaft 70 may be used in common where applicable.

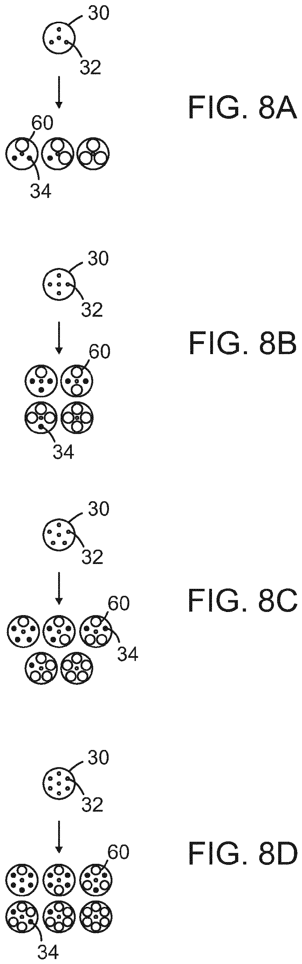

The diagrams of FIGS. 8A-8D illustrate options of using different top end plates 30 having three, four, five or six apertures 32, wherein each respective top end plate 30 may have mounted thereon optionally one to three, one to four, one to five and one to six electric motors 60. In use, however, at least two electric motors 60 are always mounted on each top end plate 30 according to the invention.

The foregoing detailed description is given primarily for clearness of understanding and no unnecessary limitations are to be understood therefrom. Modifications will become obvious to those skilled in the art upon reading this disclosure and may be made without departing from the scope of the appended claims.

## Claims

1. A boat thruster drive unit (10) including a transmission unit (20) comprising:
a gear housing having first and second end plates (30, 40); and
an annular gear (50) having an output shaft (54) rotatably supported between the end plates (30, 40);
**characterized by**
at least two electric motors (60); and
at least three spaced sealable apertures (32) in the first end plate (30) receiving optionally two or at least three corresponding drive shafts (62) of a corresponding number of said electric motors (60) to be mounted on the first end plate (30) for gear engagement with the annular gear (50).

2. The unit of claim 1, further comprising a second output shaft (70) rotatably supported in the second end plate in gear engagement with the output shaft (54).

3. The unit of claim 2, further comprising mutually interchangeable gears (56, 72) on the output shaft (54) and the second output shaft (70) for the gear engagement therebetween.

4. The unit of any of claims 1 to 3, comprising sealing means (34) for sealing one or more of said apertures (32) that will not receive a motor shaft (62).

5. The unit of any of claims 1 to 4, wherein the first end plate (30) has four of said apertures (32).

6. The unit of any of claims 1 to 4, wherein the first end plate (30) has five of said apertures (32).

7. The unit of any of claims 1 to 4, wherein the first end plate (30) has six of said apertures (32).

8. A boat thruster assembly comprising a drive unit (10) according to any of claims 1-7 and a thruster unit (80) adapted to be driven by the output shaft (54) or the second output shaft (70) according to claim 2 of the transmission unit (20).

9. A boat (100) provided with a thruster assembly according to claim 8.

## Patentansprüche

1. Boot-Strahlruder-Antriebseinheit (10) mit einer Getriebeeinheit (20), umfassend:
ein Getriebegehäuse mit ersten und zweiten Endplatten (30, 40); und
ein ringförmiges Zahnrad (50) mit einer Ausgangswelle (54), drehbar zwischen den Endplatten (30, 40) gelagert
**charakterisiert durch**
mindestens zwei Elektromotoren (60); und
mindestens drei voneinander beabstandete verschließbare Öffnungen (32) in der ersten Endplatte (30) aufnehmend wahlweise zwei oder mindestens drei entsprechende Antriebswellen (62) einer entsprechenden Anzahl der Elektromotoren (60), die an der ersten Endplatte (30) zum Zahnradeingriff mit dem Zahnrad (50) zu montieren sind.

2. Einheit nach Anspruch 1, ferner mit einer zweiten Ausgangswelle (70), die drehbar gelagert ist in der zweiten Endplatte in Zahnradeingriff mit der Ausgangswelle (54).

3. Einheit nach Anspruch 2, ferner umfassend gegenseitig austauschbare Zahnräder (56, 72) an der Ausgangswelle (54) und der zweiten Ausgangswelle (70) für den Zahnradeingriff dazwischen.

4. Einheit nach einem der Ansprüche 1 bis 3, umfassend eine Dichtungseinrichtung (34) zum Abdichten einer oder mehrerer der Öffnungen (32), die keine Motorwelle (62) aufnehmen.

5. Einheit nach einem der Ansprüche 1 bis 4, wobei die erste Endplatte (30) vier der Öffnungen (32) aufweist.

6. Einheit nach einem der Ansprüche 1 bis 4, wobei die erste Endplatte (30) fünf der Öffnungen (32) aufweist.

7. Einheit nach einem der Ansprüche 1 bis 4, wobei die erste Endplatte (30) sechs der Öffnungen (32) aufweist.

8. Boot-Strahlruder anordnung mit einer Antriebseinheit (10) nach einem der Ansprüche 1-7 und eine Schubeinheit (80), die von der Ausgangswelle (54) oder der zweiten Ausgangswelle (70) gemäß Anspruch 2 der Getriebeeinheit (20).

9. Boot (100), das mit einer Strahlruder anordnung nach Anspruch 8 versehen ist.

## Revendications

1. Unité d'entraînement (10) de propulseur de bateau comprenant une unité de transmission (20) comprenant :
un carter d'engrenage comportant des première et seconde plaques d'extrémité (30, 40); et
un engrenage annulaire (50) comportant un arbre de sortie (54) supporté de manière rotative entre les plaques d'extrémité (30, 40);
**caractérisé par**
au moins deux moteurs électriques (60); et
au moins trois ouvertures (32) scellables espacées dans la première plaque d'extrémité (30) recevant éventuellement deux ou au moins trois arbres d'entraînement correspondants (62) d'un nombre correspondant de moteurs électriques (60) à monter sur la première plaque d'extrémité (30) pour engagement par engrenage avec l'engrenage annulaire (50).

2. Unité selon la revendication 1, comprenant en outre un second arbre de sortie (70) supporté de manière rotative dans la seconde plaque d'extrémité en engagement par engrenage avec l'arbre de sortie (54).

3. Unité selon la revendication 2, comprenant en outre des engrenages mutuellement interchangeables (56, 72) sur l'arbre de sortie (54) et le second arbre de sortie (70) pour l'engagement d'engrenage entre eux.

4. Unité selon l'une quelconque des revendications 1 à 3, comprenant des moyens d'étanchéité (34) pour sceller une ou plusieurs desdites ouvertures (32) qui ne recevront pas d'arbre de moteur (62).

5. Unité selon l'une quelconque des revendications 1 à 4, dans laquelle la première plaque d'extrémité (30) comporte quatre desdites ouvertures (32).

6. Unité selon l'une quelconque des revendications 1 à 4, dans laquelle la première plaque d'extrémité (30) comporte cinq desdites ouvertures (32).

7. Unité selon l'une quelconque des revendications 1 à 4, dans laquelle la première plaque d'extrémité (30) comporte six desdites ouvertures (32).

8. Ensemble propulseur de bateau comprenant une unité d'entraînement (10) selon l'une quelconque des revendications 1 à 7 et une unité de propulseur (80) adaptée pour être entraînée par l'arbre de sortie (54) ou le second arbre de sortie (70) selon la revendication 2 de l'unité de transmission (20).

9. Bateau (100) équipé d'un ensemble propulseur selon la revendication 8.
